# EUROPEAN PATENT SPECIFICATION

(11) **EP 4 532 088 B1**
(45) Date of publication and mention of the grant of the patent: **07.10.2026**
(21) Application number: 23815359.7
(22) Date of filing: 29.05.2023
(51) Int. Cl.: B01F 23/2361, B01F 23/237, B01F 35/60, A23L 2/54

(54) **A SPARKLING WATER MAKING DEVICE**
VORRICHTUNG ZUR HERSTELLUNG VON SCHAUMWASSER
DISPOSITIF DE FABRICATION D'EAU PÉTILLANTE

(30) Priority: 30.05.2022 FI 20225468
(43) Date of publication of application: 09.04.2025
(73) Proprietor: Mysoda Oy, 00880 Helsinki (FI)
(72) Inventor: SOLOMON, David, 00880 Helsinki (FI)
(74) Representative: Primrose Oy
(86) International application number: PCT/FI2023/050299
(87) International publication number: WO 2023/233072

(56) References cited:
- EP-B1- 0 172 815
- WO-A1-01/03817
- WO-A1-2020/148294
- WO-A1-2023/052460
- WO-A1-97/25130
- WO-A2-2020/148293
- US-A- 4 323 090
- US-A- 4 342 710
- US-A1- 2017 246 597
- US-A1- 2017 246 597

## Description

### FIELD OF THE INVENTION

The present invention relates to a sparkling water making device and more particularly to a sparkling water device according to the preamble of the independent claim 1.

### BACKGROUND OF THE INVENTION

Typical sparkling water making devices are only suitable for plastic water containers, because during carbonation the water containers are in no way protected from breakage.

Prior art teaches also sparkling water making devices which are suitable for glass water containers. The publication EP 1 793 917 B1 discloses a device for carbonating a liquid in a container with a pressurized gas comprising a receiving flask for the container and a filling head for adding gas into said liquid in the container. The receiving flask and the filling head are movable in relation to each other between an insertion position and a carbonating position. In the insertion position the filling head is spaced from the receiving flask in a vertical direction. In the carbonating position, the receiving flask and the filling head are in contact with each other such as to form a substantially closed cavity.

Document EP 0 172 815 B1 discloses a portable machine for carbonating liquid contained in a bottle is adapted to support the bottle by the neck through a bayonet connection and for a seal which closes the bottle neck to be driven into engagement with the bottle neck by a piston actuated by the first burst of gas supplied to the injection nozzle. Document US 2017/246597 discloses a safety door for a carbonator. Document WO 97/25130 discloses a system of carbonizing water as part of making a carbonized beverage. Document WO 01/03817 discloses a carbonating device that provides carbon dioxide under pressure into a beverage, wherein the feeding tip comprises a variable Venturi hole where said carbon dioxide under pressure contacts the beverage.

One of the problems associated with the prior art is that the vertical movement of the filling head requires space for operating the device which has to be taken into account in the placement of the device. Another problem associated with the prior art is that the movement of the filling head makes the device unstable, and operating the device is difficult or even impossible one handed.

### BRIEF DESCRIPTION OF THE INVENTION

An object of the present invention is to provide a sparkling water making device which overcomes the problems caused by the prior art due to space requirements of the device. Another object of the present invention is to provide a sparkling water making device which is stable, and which can be operated one handed.

The objects of the invention are achieved by a sparkling water making device which is characterized by what is stated in the independent claim. The preferred embodiments of the invention are disclosed in the dependent claims.

The invention is based on the idea of providing a container compartment in connection with the sparkling water making device for the water container which remains in place at all times, and which protects the water container so that glass containers can be used in the sparkling water device.

The invention is also based on the idea of providing a mechanical sparkling water making device which is operable without any electricity or electrical components or any power source providing current to the sparkling water making device. The sparkling water making device according to the invention is completely mechanical device, which also only has mechanical parts for operating the sparkling water making device.

In the context of this application, a water container means, for example, a water bottle or a similar water tank having an orifice through which water can be poured out of the water container, for example into a glass. The most preferable example of the water container is a water bottle, and the sparkling water making device according to the invention is especially suitable for carbonating water provided in a water bottle made of glass.

A sparkling water making device for carbonating water in a water container with pressurized gas according to the invention comprises a body having a bottom, a top and a body structure extending between the bottom and the top. The body having a container compartment for the water container, a carbonation head for connecting the water container to the sparkling water making device and for carbonating water in the water container, and a sliding door. The container compartment having an opening through which the water container is placed inside the container compartment. The carbonation head is provided in connection with the container compartment and the sliding door is provided in connection with the opening. The sliding door being arranged to slide in a horizontal direction between an open position, in which the container compartment is accessible from outside the container compartment through the opening, and a closed position, in which the opening is closed with the sliding door to provide a closed container compartment.

In other words, the body has a container compartment into which the water container is inserted through the opening in the container compartment. The sliding door is arranged to close the opening of the container compartment for providing a closed container compartment such that the carbonation can be performed for water in a glass water container, and the sliding door is arranged to open the opening of the container compartment for placing the water container to the container compartment and for removing the water container from the container compartment.

The sliding door is arranged to slide in a horizontal direction such that the sparkling water making device maintains the same position in a vertical direction despite the state of use of the device. The sliding door in connection with the container compartment is arranged to close the container compartment and thus enclose the water container inside the container compartment during the carbonation of the water so that, in the event of breakage of the glass of the water container, the fragments do not end outside the container compartment.

The sparkling water making device according to the invention comprises a horizontally movable sliding door, the sliding door thereby moving horizontally from an open position to a closed position, and from the closed position to the open position. In a preferred embodiment of the invention the sliding door is arranged to move along a circular trajectory path in a horizontal direction. This means that the trajectory path of the sliding door forms a circle or part of a circle, so that the circular path has the same centre point at everywhere. This also means that the sliding door is a curved sliding door with a centre of curvature being the same as the centre of curvature of the circular trajectory path. The curved sliding door is moving along the circular trajectory path in the horizontal direction between the open position and the closed position.

The carbonation head is arranged to form together with the water container an interlocking connection so that the water container is connected through the carbonation head to the sparkling water making device and remains securely in place during the carbonation.

According to the invention in the closed position the sliding door is arranged to cover the opening of the container compartment and in the open position the sliding door is arranged aside the opening of the container compartment.

In other words, when the opening of the container compartment is open so that the water container can be inserted into the container compartment or the water container can be removed from the container compartment, the sliding door is away from the opening, i.e., the sliding door is not covering the opening. The container compartment can be accessed only when the sliding door is not covering the opening. When the sliding door is set to cover the opening, the container compartment is closed, and the inside cannot be accessed from outside the container compartment.

According to the invention the container compartment is arranged in connection with the body structure between the bottom and the top of the body.

In other words, the container compartment forming a connection with the body structure, either directly or indirectly, and in a preferred embodiment of the invention the container compartment is arranged within the body structure.

According to an embodiment of the invention the sliding door is arranged to move outside the body or along an outer surface of the body between the open position and the closed position.

In other words, the sliding door covering the opening of the container compartment is arranged to move between the open position and the closed position outside the container compartment.

According to an embodiment of the invention the sliding door is arranged to move inside the body between the open position and the closed position. Alternatively, the sliding door is arranged to move inside the container compartment between the open position and the closed position. Alternatively, the sliding door is arranged to move in between the container compartment and the body between the open position and the closed position.

In other words, the sliding door is arranged to move inside the body when the container compartment is provided within the body or within the body structure, or the sliding door is arranged to move inside the container compartment or in a place between the container compartment and the body. In these embodiments the sliding door is provided such that it moves at least within the outermost surface of the sparkling water making device. This provides the least space required for the device when used.

In a preferable embodiment of the invention the sliding door is arranged to move along a curved direction of movement. In other words, the sliding door is arranged to move along a curved path between the open position and the closed position. The curved movement path of the sliding door is particularly advantageous, because then the sliding door does not take up extra space on the side of the device or the device does not have to be made larger in the width direction due to the sliding door. The sliding door is then able to move along a curved path from the closed position of the opening to the open position of the opening by turning according to the curved path towards the opposite wall of the device or container compartment with respect to the opening or even at least partly along the opposite wall of the opening. This is especially advantageous when the container compartment has a cylindrical or otherwise curved form.

According to the invention the sliding door is manually movable between the open position and the closed position.

In other words, the sliding door can preferably be pushed and pulled between the open position and the closed position.

According to the invention the sparkling water making device comprises a door operating mechanism connected to the sliding door, the door operating mechanism is arranged to move the sliding door between the open position and the closed position such that the door operating mechanism is arranged to move the sliding door from the open position to the closed position. Alternatively, the door operating mechanism is arranged to move the sliding door between the open position and the closed position such that the door operating mechanism is arranged to move the sliding door from the closed position to the open position. Alternatively, the door operating mechanism is arranged to move the sliding door between the open position and the closed position such that the door operating mechanism is arranged to move the sliding door from the closed position to the open position and from the open position to the closed position.

In the most preferred embodiment of the invention the door operating mechanism is arranged to move the sliding door from the closed position to the open position and the sliding door is moved from the open position to the closed position manually by pulling it to the closed position by the user.

Alternatively, the sliding door can be pulled to the closed position manually by hand and then the door operating mechanism may move the sliding door to the open position. Alternatively, the door opening mechanism may be arranged to move the sliding door to the closed position and to the open position such that there is no need for manually opening or closing the container compartment by hand. Manually in this context means that the sliding door is pushed or pulled by hand in order to make the sliding door to move between the open position and the closed position. The closed position means that the opening to the container compartment is closed with the sliding door and the open position means that the container compartment is open and accessible through the opening.

According to the invention the sparkling water making device comprises a first switch arranged to operate the door operating mechanism for moving the sliding door.

In other words, the door operating mechanism is operated through the first switch and as the sliding door is operated through the door operating mechanism, then the first switch is arranged to operate the sliding door to either close the container compartment with the sliding door by moving the sliding door to cover the opening to the container compartment, or open the container compartment by moving the sliding door away from covering the opening to the container compartment, or both.

The first switch operating the sliding door is a mechanical switch mechanically coupled to the sliding door for operating it.

The sliding door operating mechanism comprises a spring connection with the sliding door, whereby releasing the spring to a free position the sliding door opens. The free position of the spring is the position in which the spring is not compressed. Alternatively, or in addition, the sliding door operating mechanism may comprise a magnetic connection in which, by releasing the magnetic connection, the sliding door moves to the open position. The spring can alternatively be a gas spring. The spring connection has the spring as a pre-stressing member which is arranged to be pre-stressed when the sliding door is in the closed position. This means that the spring is compressed when the sliding door is in the closed position. The spring, i.e., the pre-stressing member, is arranged to move the sliding door to the open position when the sliding door is released from the closed position.

The door operating mechanism further comprises a release member which releases the sliding door to move from the closed position to the open position. The release member is preferably a hook or a latch which keeps the sliding door in the closed position while the spring is compressed and when the sliding door is released by moving the release member away from the contact with the sliding door, the tension of the spring is released and the door moves from the closed position to the open position.

In a preferable embodiment of the invention the door operating mechanism or the sliding door itself comprises a counter buffer, which slows down the movement of the sliding door so that the sliding door moves to the open position softly, the open position being the position in which the container compartment is accessible from outside the container compartment through the opening.

In a most preferable embodiment of the invention the curved sliding door is arranged to move horizontally along a curved path from the closed position to the open position by operating the first switch which is mechanically connected to the mechanical door operating mechanism. Operation of the door operating mechanism opens the opening to the container compartment by moving the curved sliding door softly from the closed position to the open position along the curved trajectory path. The soft movement of the curved sliding door is provided by the counter buffer which softens especially the end part of the movement when the sliding door is near to the totally open position. This means that the movement of the sliding door along the curved path becomes slower towards the end of the movement when the sliding door moves from the closed position to the open position.

According to the invention the sparkling water making device comprises a carbonation mechanism connected to the carbonation head, the carbonation mechanism is arranged to provide carbon dioxide from a carbon dioxide cylinder to the water container through the carbonation head for carbonating water in the water container with pressurized gas.

In other words, the sparkling water making device comprises, when the device is ready for use, a carbon dioxide cylinder which is placed in the sparkling water making device and operated through the carbonation mechanism to supply carbon dioxide to the water in the water container. The carbon dioxide cylinder comprises a valve and the carbonation mechanism is arranged to operate the valve with an actuator. When the actuator opens the valve, carbon dioxide is fed from the carbon dioxide cylinder through the carbonation head to the water in the water container. The valve is typically a pin valve which is pressed by the actuator in order to provide carbon dioxide flow out from the carbon dioxide cylinder.

According to the invention the sparkling water making device comprises a second switch arranged to operate the carbonation mechanism for providing carbon dioxide from the carbon dioxide cylinder through the carbonation head for carbonating the water in the water container.

In other words, the carbonation mechanism is operated through the second switch such that using the second switch causes the carbon dioxide flow from the carbon dioxide cylinder to pass through the carbonation head into the water in the water container.

According to the invention the first switch and the second switch form together a common switch.

In other words, the first switch and the second switch can be provided in the common switch so that by activating part of the common switch or moving the common switch into a first position the door operating mechanism is activated and by activating the other part of the common switch or moving the common switch into a second position the carbonation mechanism is activated.

According to the invention the common switch having a first operating position arranged to operate the door operating mechanism and a second operating position arranged to operate the carbonation mechanism. Alternatively, the common switch having a first operating position arranged to operate the door operating mechanism and a second operating position arranged to operate the carbonation mechanism, and the common switch being rocker switch.

In other words, the rocker switch provides a way to activate two different operations by pressing either side of the rocker switch.

According to the invention the common switch is provided to the top of the body. Alternatively, the common switch is provided as at least part of a top surface of the sparkling water making device.

The common switch may form the top surface or part of the top surface of the sparkling water device such that the common switch is hidden as part of the body of the sparkling water device and by pressing the upper surface or part of the upper surface the door opening mechanism or the carbonation mechanism is activated.

According to the invention the sparkling water making device comprises a security mechanism which prevents carbonation when the sliding door is in the open position so that the opening to the container compartment is open and accessible from outside the container compartment. In other words, the security mechanism allows carbonation only when the sliding door is in the closed position so that the container compartment is closed and without access from outside the container compartment. The security mechanism is connected to the second switch which operates the carbonation mechanism and alternatively also to the first switch operating the door operating mechanism to detect the position of the sliding door.

In other words, the security mechanism is arranged to detect the position of the sliding door, and in the event of the open position of the sliding door, the security mechanism is arranged to prevent carbonation, whereby the carbonation mechanism does not work. In the event of the closed position of the sliding door, the security mechanism is arranged to allow carbonation, whereby the carbonation mechanism is operable.

According to the invention the body structure comprising an outer shell of the sparkling water device, and the container compartment is provided within the outer shell such that the sliding door forms part of the outer shell of the sparkling water device in the closed position.

In other words, the sliding door may form part of the outer shell of the sparkling water device so that when the sliding door is in the open position the outer shell provides a path to the container compartment.

According to the invention the outer shell having an outer shell opening, and in the closed position the sliding door is arranged to cover both the outer shell opening and the opening of the container compartment, and in the open position the outer shell opening, and the opening of the container compartment are both open.

According to the invention the sparkling water making device comprises a body having a cylindrical form such that the container compartment is provided within the body. In other words, the body has an outer surface which forms a cylindrical outer shell for the sparkling water making device and the container compartment is provided within the cylindrical outer shell. The opening to the container compartment is provided through the cylindrical outer shell and the sliding door is arranged to move within the cylindrical outer shell. Also, the cylinder compartment is provided within the cylindrical outer shell. The first switch and/or the second switch or the common switch is provided in connection with the top surface of the cylindrical body of the sparkling water making device. In a preferable embodiment of the invention the switches, that are either separate or common, form the top surface of the cylindrical body of the sparkling water making device. The sliding door is curved and arranged to move between the open position and the closed position along a curved path within the cylindrical outer shell of the body of the sparkling water making device.

An advantage of the invention is that the container compartment can be closed to keep a glass water container inside the container compartment during carbonation without the risk of the glass shards spreading into the environment if broken. Still the sparkling water making device can be kept as compact as possible without requiring extra space for the openable container compartment in any direction, but the device remains in normal reach in all situations.

### BRIEF DESCRIPTION OF THE DRAWINGS

The invention is described in detail by means of specific embodiments with reference to the enclosed drawings, in which
Figure 1 shows a sparkling water making device according to one embodiment of the invention as seen from front;
Figure 2 shows the sparkling water making device of figure 1 as seen from side;
Figure 3 shows another embodiment of the sparkling water making device according to the invention as seen from front;
Figure 4 shows the sparkling water making device of figure 3 as seen from top;
Figure 5 shows a sparkling water making device according to the invention having the sliding door in the closed position;
Figure 6 shows a sparkling water making device according to the invention having the sliding door in the open position; and
Figure 7 shows the sparkling water making device of figure 6 as seen from top.

### DETAILED DESCRIPTION OF THE INVENTION

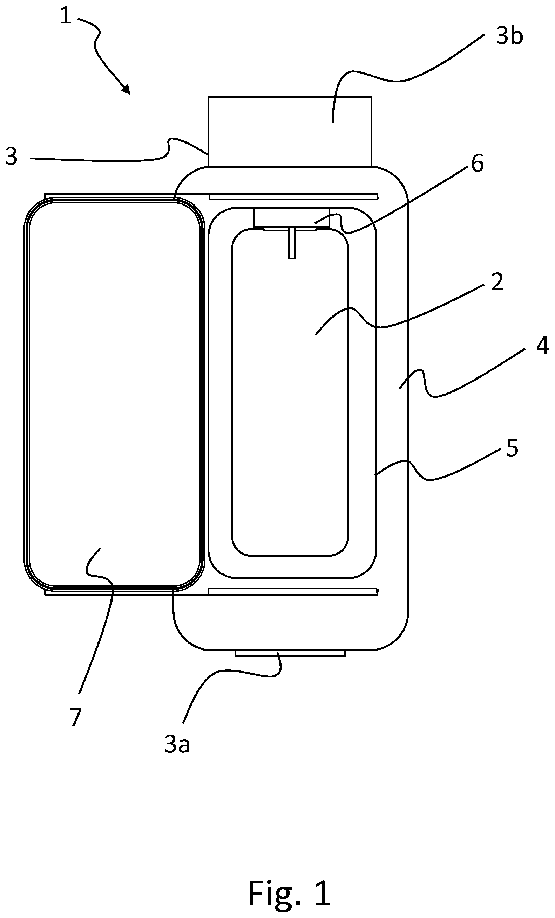

Figure 1 shows a sparkling water making device 1 as seen from front. The sparkling water making device 1 comprises a body 3 having a bottom 3a, a top 3b and a body structure 3c extending between the bottom 3a and the top 3b. The body 3 has a container compartment 4 for the water container 2 which is placed inside the container compartment 4 in the figure 1. The container compartment 4 has an opening 5 through which the water container 2 is placed inside the container compartment 4 and through which the water container 2 can be removed from the container compartment 4. The body 3 further has a carbonation head 6 in connection with the container compartment 4 for connecting the water container 2 to the sparkling water making device 1 and for carbonating water in the water container 2. The carbonation head 6 is provided within the container compartment 4 and the water container 2 is connected to the carbonation head 6 in figure 1. The carbonation head 6 can be movable for example such that it tilts toward the opening 5 when the water container is inserted to the carbonation head 6 or removed from the carbonation head 6, or the carbonation head 6 can be movable for example in vertical direction for connecting to the carbonation head 6 or disconnecting the water container 2 from the carbonation head 6. The body 3 further has a sliding door 7 in connection with the opening 5. The sliding door 7 is arranged to slide in a horizontal direction between an open position, in which the container compartment 4 is accessible from outside the container compartment 4 through the opening 5, and a closed position, in which the opening 5 is closed with the sliding door 7 to provide a closed container compartment 4. The figure 1 shows the open position in which the opening 5 is not covered with the sliding door 7 but the sliding door 7 is arranged aside the opening 5. In the embodiment of the sparkling water making device 1 in figure 1 the sliding door 7 is arranged to slide sideways, i.e., laterally, from the opening 5, and in that position, i.e. where the sliding door 7 is aside the opening 5, the sliding door 7 can further be pivotable to the side of the sparkling water making device 1 so as not to take up space next to the sparkling water making device 1.

The body structure 3c is not shown in figure 1 since the container compartment 4 covers the view. The sparkling water making device 1 stands so that the bottom 3a is against a standing surface and the top 3b of the body 3 is in an upright position relative to the standing surface. The container compartment 4 is provided between the top 3b and the bottom 3a. The sliding door 7 is arranged to move in a horizontal direction between the open position and the closed position.

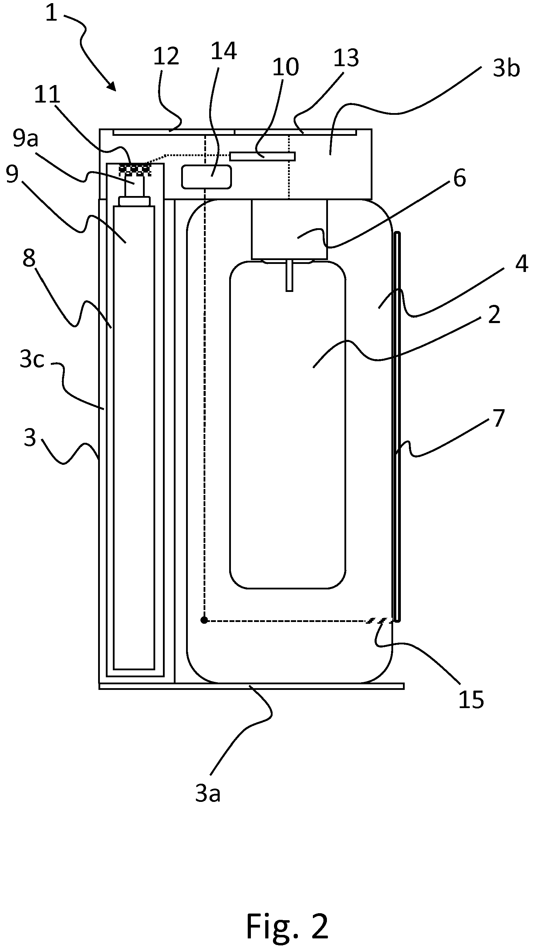

Figure 2 shows the sparkling water making device 1 of figure 1 as seen from side. The figure 2 shows the body structure 3c extending between the top 3b and the bottom 3a of the body 3. The figure 2 also shows the interior of the sparkling water making device 1 showing the carbon dioxide cylinder 9 which is not part of the device 1 but is placed in a cylinder compartment 8 when the sparkling water making device 1 is provided ready for use. The cylinder compartment 8 is preferably arranged in connection with the body structure 3c of the sparkling water making device 1. The top 3b of the body 3 comprises a carbonation mechanism 10 connected to the carbonation head 6 and comprising an actuator 11 arranged to operate a valve 9a of the carbon dioxide cylinder 9. The carbonation mechanism 10 is operated by a second switch 13 for providing carbon dioxide from the carbon dioxide cylinder 9 through the carbonation head 6 to water provided in the water container 2 for carbonating the water in the water container 2. The flow path of the carbon dioxide from the carbon dioxide cylinder 9 to the carbonation head 6 and in the carbonation head 6 is not shown for the sake of clarity.

The figure 2 also shows a door operating mechanism 14 connected to the sliding door 7 for opening and closing the sliding door 7 in connection with the opening 5 (the opening is not shown in figure 2 because of the side view), which forms an access from outside the sparkling water making device 1 to the container compartment 4. The door operating mechanism 14 is further connected to a first switch 12 which is arranged to activate the door opening mechanism 14 in response to an operation of the first switch 12. The first switch 12 and the second switch 13 are arranged to the top 3b of the body 3 and they form at least part of the top surface of the sparkling water making device 1. However, the invention is not limited to only this example of the position of the switches or their mutual positioning relative to the sparkling water making device 1. The first switch 12 and the second switch 13 may form together a common switch such that they are provided at the same blank. The door operating mechanism 14 is arranged either to move the sliding door 7 from the open position to the closed position or move the sliding door from the closed position to the open position, or move the sliding door between the open position and the closed position in either direction. The figure 2 shows one embodiment of the door operating mechanism 14 comprising a spring 15 which causes the door to move.

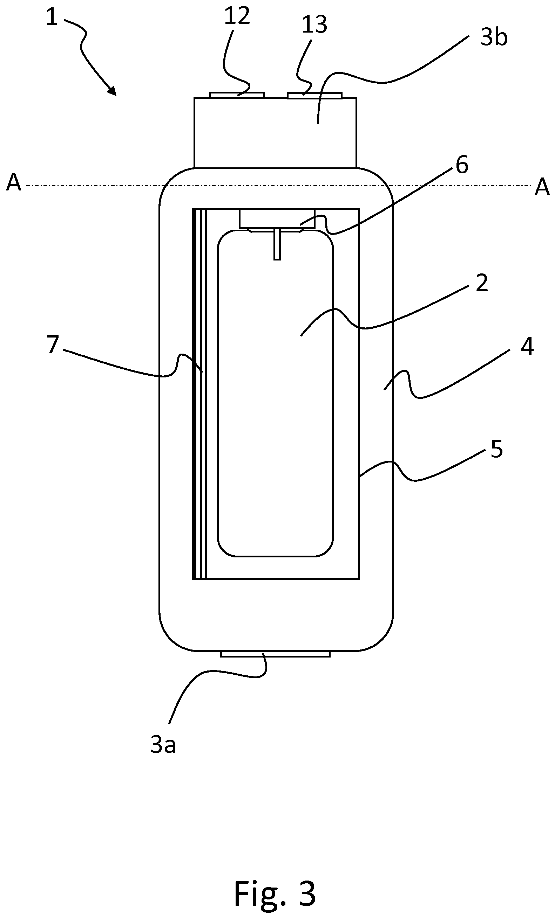

Figure 3 shows another embodiment of the sparkling water making device 1 according to the invention as seen from front. The figure 3 shows the sparkling water making device 1 in a state in which the sliding door 7 is provided in an open state such that the container compartment 4 is accessible from outside the sparkling water making device 1 through the opening 5. The sliding door 7 is provided within the container compartment 4 in this embodiment of the invention and it is slidable between the open position and the closed position inside the container compartment. The water container 2 is connected to the carbonation head 6 inside the container compartment 4. The container compartment 4 is provided between the top 3b and the bottom 3a of the body 3 of the sparkling water making device 1. The first switch 12 and the second switch 13 are in this example two separate switches provided to the top 3b of the body 3.

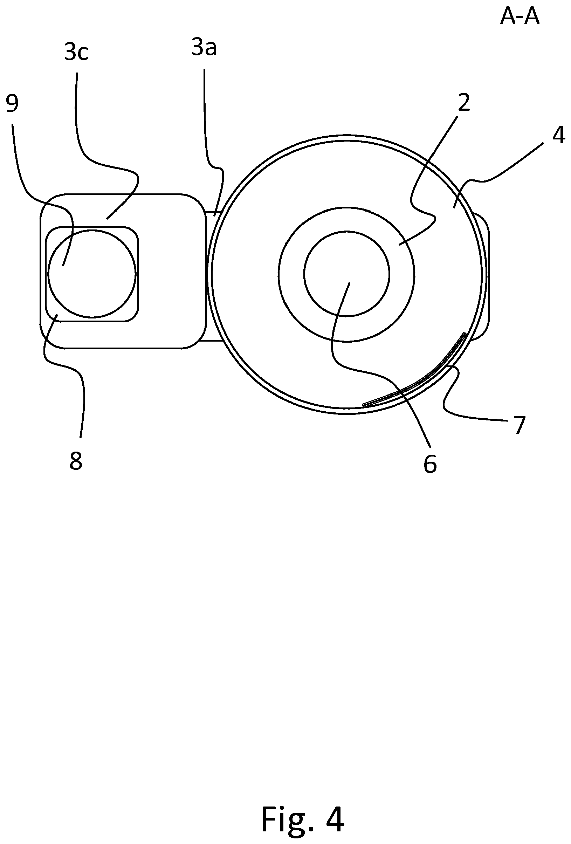

Figure 4 shows the sparkling water making device of figure 3 as seen from the dashed line A-A of figure 3 towards the bottom 3a of the sparkling water making device 1. The cylinder compartment 8 is provided in the body structure 3c of the sparkling water making device 1 and comprises a carbon dioxide cylinder 9 inside the cylinder compartment 8 although the carbon dioxide cylinder 9 is not part of the sparkling water making device 1 similarly as the water container 2 is not part of the sparkling water making device 1. The container compartment 4 is provided in connection with the bottom 3a of the body 3 of the sparkling water making device 1. Alternatively, or in addition the container compartment 4 may form at least part of the bottom 3a of the sparkling water making device 1. Alternatively, or in addition the container compartment 4 forms the bottom 3a of the body 3 of the sparkling water making device 4 such that the container compartment 4 is part of the body 3 of the sparkling water making device 1. The figure 4 further shows that the sliding door 7 is provided within the container compartment 4. The sliding door 7 is arranged to be movable between the open position and the closed position inside the container compartment 4 through the door operating mechanism (not shown in figure 4) or manually by pulling and/or pushing the sliding door 7 between the open position and the closed position.

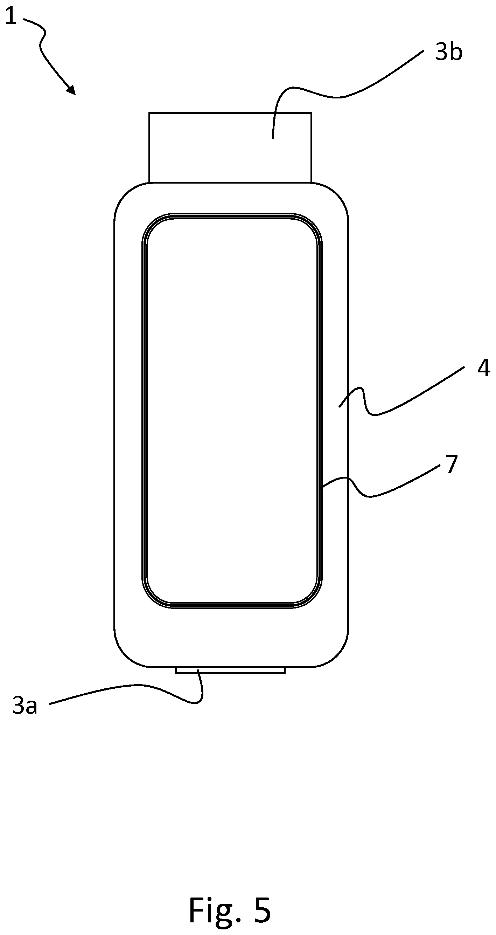

Figure 5 shows a sparkling water making device 1 according to the invention having the sliding door 7 in the closed position. The container compartment 4 is closed with the sliding door 7 provided in the closed position such that the container compartment 4 provides a closed space for the water container 2 inside the container compartment 4 for carbonation with carbon dioxide. As the container compartment is closed, the water container that is made of glass is safe to use even if there is a possibility that the glass water container may break during the carbonation. The container compartment 4 is provided between the top 3b of the body 3 and the bottom 3a of the body 3 of the sparkling water making device 1.

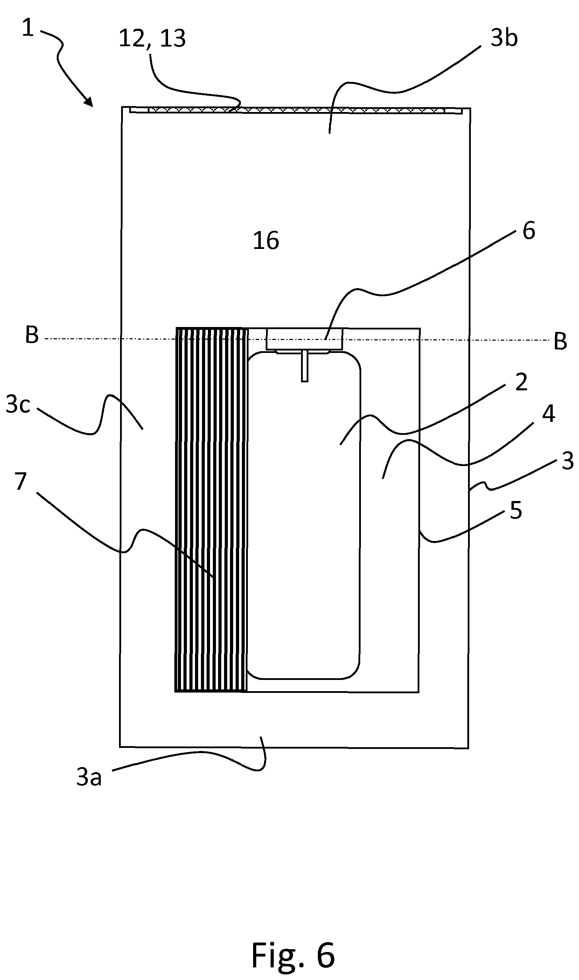

Figure 6 shows a sparkling water making device 1 according to the invention having the sliding door 7 in the open position. The water container 2 is connected to the carbonation head 6 inside the container compartment 4. The sliding door 7 is arranged in this embodiment of the invention between an outer shell of the sparkling water making device 1 and the container compartment 4 such that the sliding door 7 closes the container compartment 4 from outside the container compartment 4, but inside the body 3 of the sparkling water making device 1 such that the sliding door 8 is not arranged outside the sparkling water making device 1. In other words, the body structure 3c of the sparkling water making device 1 comprises the outer shell 16 and the container compartment is provided within the outer shell 16 such that the sliding door 7 is provided in between the outer shell 16 and the container compartment 4. In the closed position of the sliding door 7 the sliding door 7 forms part of the outer shell when the sliding door 7 covers the opening to the container compartment 4. The bottom 3a is formed by the container compartment 4 provided inside the outer shell 16 together with the outer shell 16 at the bottom. The first switch 12 and the second switch 13 are provided at the top 3b of the body 3 of the sparkling water making device 1 forming part of the upper surface of the sparkling water making device 1. The first switch 12 and the second switch 13 are provided as a common switch in this example of the switch. The outer shell 16 has a converging opening 5 with the container compartment 4 which is closable with the sliding door 7.

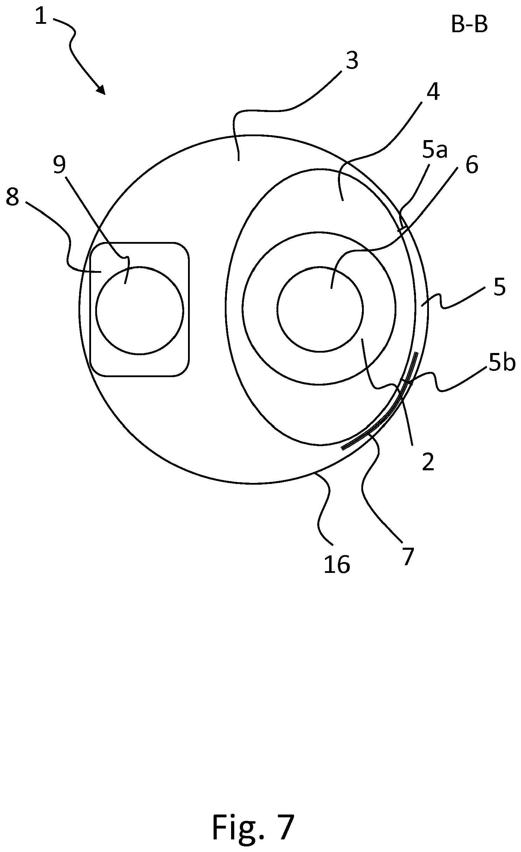

Figure 7 shows the sparkling water making device 1 of figure 6 as seen from the dashed line B-B of figure 6 towards the bottom 3a of the sparkling water making device 1. This figure shows the position of the sliding door 7 between the outer shell 16 of the sparkling water making device 1 and the container compartment 4. The container compartment 4 is provided within the body 3 of the sparkling water making device 1 inside the outer shell 16. The opening 5 to the container compartment 4 is arranged to extend from the outer shell 16 to the container compartment 4. Figure 7 shows the side walls 5a, 5b of the opening 5 which define the opening in horizontal direction. As can be seen from figure 7, the sliding door 7 is arranged to move in a space between the container compartment 4 and the outer shell 16 of the sparkling water making device 1. In other words, the sliding door 7 is provided outside the container compartment 4 but inside the outer shell 16. The water container 2 is connected to the carbonation head 6 in the container compartment 4. The body 3 of the sparkling water making device 1 further encloses a cylinder compartment 8 having a carbon dioxide cylinder 9 inside the cylinder compartment 8.

The invention has been described above with reference to the examples shown in the figures. However, the invention is in no way restricted to the above examples but may vary within the scope of the claims.

## Claims

1. A sparkling water making device (1) for carbonating water in a water container (2) with pressurized gas, wherein the sparkling water making device (1) comprises:
a body (3) having a bottom (3a), a top (3b) and a body structure (3c) extending between the bottom (3a) and the top (3b), the body having:
a container compartment (4) for the water container (2), the container compartment (4) having an opening (5) through which the water container (2) is placed inside the container compartment (4);
a carbonation head (6) in connection with the container compartment (4) for connecting the water container (2) to the sparkling water making device (1) and for carbonating water in the water container (2); and
a sliding door (7) in connection with the opening (5), the sliding door (7) being arranged to slide in a horizontal direction between an open position, in which the container compartment (4) is accessible from outside the container compartment (4) through the opening (5), and a closed position, in which the opening (5) is closed with the sliding door (7) to provide a closed container compartment (4);
the sparkling water making device (1) further comprises:
a first switch (12) arranged to operate the sliding door (7) through a door operating mechanism (14) for moving the sliding door (7), the first switch (12) is a mechanical switch mechanically coupled to the sliding door (7) for operating it,
the door operating mechanism (14) is connected to the first switch (12) which is arranged to activate the door opening mechanism (14) in response to an operation of the first switch (12), and
the door operating mechanism (14) is connected to the sliding door (7), the door operating mechanism (14) is arranged to move the sliding door (7) from the closed position to the open position, **characterized in that** the door operating mechanism (14] comprises
- a spring connection with the sliding door (7), whereby releasing a spring (15) to a free position the sliding door opens, the free position of the spring (15) is the position in which the spring (15) is not compressed, and/or
- a magnetic connection in which, by releasing the magnetic connection, the sliding door moves to the open position.

2. A sparkling water making device (1) according to claim 1, **characterized in that** in the closed position the sliding door (7) is arranged to cover the opening (5) of the container compartment (4) and in the open position the sliding door (7) is arranged aside the opening (5) of the container compartment (4).

3. A sparkling water making device (1) according to claim 1 or 2, **characterized in that** the container compartment (4) is arranged in connection with the body structure (3c) between the bottom (3a) and the top (3b) of the body (3).

4. A sparkling water making device (1) according to any previous claim, **characterized in that** the sliding door (7) is arranged to move outside the body (3) or along an outer surface of the body (3) between the open position and the closed position.

5. A sparkling water making device (1) according to any of claims 1-3, **characterized in that** the sliding door (7) is arranged to move inside the body (3) between the open position and the closed position; or
the sliding door (7) is arranged to move inside the container compartment (4) between the open position and the closed position; or
the sliding door (7) is arranged to move in between the container compartment (4) and the body (3) between the open position and the closed position.

6. A sparkling water making device (1) according to any previous claim, **characterized in that** the sliding door (7) is manually movable between the open position and the closed position.

7. A sparkling water making device (1) according to any previous claim, **characterized in that** the sparkling water making device (1) comprises a carbonation mechanism (10) connected to the carbonation head (6), the carbonation mechanism (10) is arranged to provide carbon dioxide from a carbon dioxide cylinder (9) to the water container through the carbonation head (6) for carbonating water in the water container (2) with pressurized gas.

8. A sparkling water making device (1) according to claim 7, **characterized in that** the sparkling water making device (1) comprises a second switch (13) arranged to operate the carbonation mechanism (10) for providing carbon dioxide from the carbon dioxide cylinder (9) through the carbonation head (6) for carbonating the water in the water container (2).

9. A sparkling water making device (1) according to claim 7 and 8, **characterized in that** the first switch (12) and the second switch (13) form together a common switch.

10. A sparkling water making device (1) according to claim 9, **characterized in that**:
the common switch having a first operating position arranged to operate the door operating mechanism (14) and a second operating position arranged to operate the carbonation mechanism (10); or
the common switch having a first operating position arranged to operate the door operating mechanism (14) and a second operating position arranged to operate the carbonation mechanism (10), and the common switch being rocker switch.

11. A sparkling water making device (1) according to claim 9 or 10, **characterized in that**:
the common switch is provided to the top (3b) of the body (3); or
the common switch is provided as at least part of a top surface of the sparkling water making device (1).

12. A sparkling water making device (1) according to any previous claim, **characterized in that** the body structure (3c) comprising an outer shell (16) of the sparkling water device (1), and the container compartment (4) is provided within the outer shell (16) such that the sliding door (7) forms part of the outer shell (16) of the sparkling water device (1) in the closed position.

13. A sparkling water making device (1) according to claim 12, **characterized in that** the outer shell (16) having an outer shell opening, and
in the closed position the sliding door (7) is arranged to cover both the outer shell opening and the opening (5) of the container compartment (4), and
in the open position the outer shell opening and the opening (5) of the container compartment (4) are both open.

## Patentansprüche

1. Sprudelwasserherstellungsvorrichtung (1) zum Karbonisieren von Wasser in einem Wasserbehälter (2) mit druckbeaufschlagtem Gas, wobei die Sprudelwasserherstellungsvorrichtung (1) umfasst:
einen Korpus (3), der ein unteres Ende (3a), ein oberes Ende (3b) und eine Korpusstruktur (3c), die sich zwischen dem unteren Ende (3a) und dem oberen Ende (3b) erstreckt, aufweist, wobei der Korpus aufweist:
ein Behälterfach (4) für den Wasserbehälter (2), wobei das Behälterfach (4) eine Öffnung (5) aufweist, durch die hindurch der Wasserbehälter (2) in das Innere des Behälterfachs (4) platziert wird;
einen Karbonisierungskopf (6) in Verbindung mit dem Behälterfach (4) zum Verbinden des Wasserbehälters (2) mit der Sprudelwasserherstellungsvorrichtung (1) und zum Karbonisieren von Wasser in dem Wasserbehälter (2); und
eine Schiebetür (7) in Verbindung mit der Öffnung (5), wobei die Schiebetür (7) dazu eingerichtet ist, in einer horizontalen Richtung zwischen einer offenen Position, in der das Behälterfach (4) von außerhalb des Behälterfachs (4) durch die Öffnung (5) hindurch zugänglich ist, und einer geschlossenen Position, in der die Öffnung (5) mit der Schiebetür (7) geschlossen ist, um ein geschlossenes Behälterfach (4) zu bilden, zu gleiten;
wobei die Sprudelwasserherstellungsvorrichtung (1) des Weiteren umfasst:
einen ersten Schalter (12), der dazu eingerichtet ist, die Schiebetür (7) über einen Türbetätigungsmechanismus (14) zum Bewegen der Schiebetür (7) zu betätigen, wobei der erste Schalter (12) ein mechanischer Schalter ist, der mechanisch mit der Schiebetür (7) gekoppelt ist, um diese zu betätigen,
wobei der Türbetätigungsmechanismus (14) mit dem ersten Schalter (12) verbunden ist, der dazu eingerichtet ist, den Türöffnungsmechanismus (14) in Reaktion auf eine Betätigung des ersten Schalters (12) zu aktivieren, und
wobei der Türbetätigungsmechanismus (14) mit der Schiebetür (7) verbunden ist und der Türbetätigungsmechanismus (14) dazu eingerichtet ist, die Schiebetür (7) aus der geschlossenen Position in die geöffnete Position zu bewegen, **dadurch gekennzeichnet, dass** der Türbetätigungsmechanismus (14) umfasst:
- eine Federverbindung mit der Schiebetür (7), wobei sich die Schiebetür öffnet, wenn eine Feder (15) in eine freie Position freigegeben wird, wobei die freie Position der Feder (15) die Position ist, in der die Feder (15) nicht zusammengedrückt ist, und/oder
- eine magnetische Verbindung, wobei sich die Schiebetür durch Freigeben der magnetischen Verbindung in die geöffnete Position bewegt.

2. Sprudelwasserherstellungsvorrichtung (1) nach Anspruch 1, **dadurch gekennzeichnet, dass** die Schiebetür (7) in der geschlossenen Position so eingerichtet ist, dass sie die Öffnung (5) des Behälterfachs (4) verdeckt und dass die Schiebetür (7) in der offenen Position neben der Öffnung (5) des Behälterfachs (4) angeordnet ist.

3. Sprudelwasserherstellungsvorrichtung (1) nach Anspruch 1 oder 2, **dadurch gekennzeichnet, dass** das Behälterfach (4) in Verbindung mit der Korpusstruktur (3c) zwischen dem unteren Ende (3a) und dem oberen Ende (3b) des Korpus (3) angeordnet ist.

4. Sprudelwasserherstellungsvorrichtung (1) nach einem der vorangehenden Ansprüche, **dadurch gekennzeichnet, dass** die Schiebetür (7) dazu eingerichtet ist, sich außerhalb des Korpus (3) oder entlang einer Außenfläche des Korpus (3) zwischen der offenen Position und der geschlossenen Position zu bewegen.

5. Sprudelwasserherstellungsvorrichtung (1) nach einem der Ansprüche 1-3, **dadurch gekennzeichnet, dass** die Schiebetür (7) dazu eingerichtet ist, sich im Inneren des Korpus (3) zwischen der offenen Position und der geschlossenen Position zu bewegen; oder
die Schiebetür (7) dazu eingerichtet ist, sich im Inneren des Behälterfachs (4) zwischen der offenen Position und der geschlossenen Position zu bewegen; oder
die Schiebetür (7) dazu eingerichtet ist, sich zwischen dem Behälterfach (4) und dem Korpus (3) zwischen der offenen Position und der geschlossenen Position zu bewegen.

6. Sprudelwasserherstellungsvorrichtung (1) nach einem der vorangehenden Ansprüche, **dadurch gekennzeichnet, dass** die Schiebetür (7) manuell zwischen der offenen Position und der geschlossenen Position bewegbar ist.

7. Sprudelwasserherstellungsvorrichtung (1) nach einem der vorangehenden Ansprüche, **dadurch gekennzeichnet, dass** die Sprudelwasserherstellungsvorrichtung (1) einen Karbonisierungsmechanismus (10) umfasst, der mit dem Karbonisierungskopf (6) verbunden ist, wobei der Karbonisierungsmechanismus (10) dazu eingerichtet ist, Kohlendioxid aus einer Kohlendioxidflasche (9) über den Karbonisierungskopf (6) in den Wasserbehälter einzuleiten, um das Wasser in dem Wasserbehälter (2) mit druckbeaufschlagtem Gas zu karbonisieren.

8. Sprudelwasserherstellungsvorrichtung (1) nach Anspruch 7, **dadurch gekennzeichnet, dass** die Sprudelwasserherstellungsvorrichtung (1) einen zweiten Schalter (13) umfasst, der dazu eingerichtet ist, den Karbonisierungsmechanismus (10) zu betätigen, um Kohlendioxid aus der Kohlendioxidflasche (9) über den Karbonisierungskopf (6) bereitzustellen, um das Wasser in dem Wasserbehälter (2) zu karbonisieren.

9. Sprudelwasserherstellungsvorrichtung (1) nach Anspruch 7 und 8, **dadurch gekennzeichnet, dass** der erste Schalter (12) und der zweite Schalter (13) zusammen einen gemeinsamen Schalter bilden.

10. Sprudelwasserherstellungsvorrichtung (1) nach Anspruch 9, **dadurch gekennzeichnet, dass**:
der gemeinsame Schalter eine erste Betätigungsposition, die dazu eingerichtet ist, den Türbetätigungsmechanismus (14) zu betätigen, und eine zweite Betätigungsposition, die dazu eingerichtet ist, den Karbonisierungsmechanismus (10) zu betätigen, aufweist; oder
der gemeinsame Schalter eine erste Betätigungsposition, die dazu eingerichtet ist, den Türbetätigungsmechanismus (14) zu betätigen, und eine zweite Betätigungsposition, die dazu eingerichtet ist, den Karbonisierungsmechanismus (10) zu betätigen, aufweist, und der gemeinsame Schalter ein Kippschalter ist.

11. Sprudelwasserherstellungsvorrichtung (1) nach Anspruch 9 oder 10, **dadurch gekennzeichnet, dass**:
der gemeinsame Schalter an dem oberen Ende (3b) des Korpus (3) bereitgestellt ist; oder
der gemeinsame Schalter mindestens als Teil einer Oberseite der Sprudelwasserherstellungsvorrichtung (1) bereitgestellt ist.

12. Sprudelwasserherstellungsvorrichtung (1) nach einem der vorangehenden Ansprüche, **dadurch gekennzeichnet, dass** die Korpusstruktur (3c) eine Außenummantelung (16) der Sprudelwasservorrichtung (1) umfasst und das Behälterfach (4) innerhalb der Außenummantelung (16) so bereitgestellt ist, dass die Schiebetür (7) in der geschlossenen Position einen Teil der Außenummantelung (16) der Sprudelwasservorrichtung (1) bildet.

13. Sprudelwasserherstellungsvorrichtung (1) nach Anspruch 12, **dadurch gekennzeichnet, dass** die Außenummantelung (16) eine Außenummantelungsöffnung aufweist, und
in der geschlossenen Position die Schiebetür (7) dazu eingerichtet ist, sowohl die Außenummantelungsöffnung als auch die Öffnung (5) des Behälterfachs (4) zu verdecken, und
in der offenen Position die Außenummantelungsöffnung und die Öffnung (5) des Behälterfachs (4) beide offen sind.

## Revendications

1. Dispositif de fabrication d'eau pétillante (1) pour la carbonatation de l'eau dans un récipient d'eau (2) avec un gaz sous pression, dans lequel le dispositif de fabrication d'eau pétillante (1) comprend :
un corps (3) ayant une partie inférieure (3a), une partie supérieure (3b) et une structure de corps (3c) s'étendant entre la partie inférieure (3a) et la partie supérieure (3b), le corps présentant :
un compartiment de récipient (4) pour le récipient d'eau (2), le compartiment de récipient (4) présentant une ouverture (5) à travers laquelle le récipient d'eau (2) est placé à l'intérieur du compartiment de récipient (4) ;
une tête de carbonatation (6) en liaison avec le compartiment de récipient (4) pour relier le récipient d'eau (2) au dispositif de fabrication d'eau pétillante (1) et pour carbonater l'eau dans le récipient d'eau (2) ; et
une porte coulissante (7) en liaison avec l'ouverture (5), la porte coulissante (7) étant agencée pour coulisser dans une direction horizontale entre une position ouverte, dans laquelle le compartiment de récipient (4) est accessible depuis l'extérieur du compartiment de récipient (4) à travers l'ouverture (5), et une position fermée, dans laquelle l'ouverture (5) est fermée avec la porte coulissante (7) pour fournir un compartiment de récipient (4) fermé ;
le dispositif de fabrication d'eau pétillante (1) comprend en outre :
un premier commutateur (12) agencé pour actionner la porte coulissante (7) par le biais d'un mécanisme d'actionnement de porte (14) pour déplacer la porte coulissante (7), le premier commutateur (12) est un commutateur mécanique couplé mécaniquement à la porte coulissante (7) pour l'actionner,
le mécanisme d'actionnement de porte (14) étant relié au premier commutateur (12) qui est agencé pour activer le mécanisme d'ouverture de porte (14) en réponse à un actionnement du premier commutateur (12), et
le mécanisme d'actionnement de porte (14) étant relié à la porte coulissante (7), le mécanisme d'actionnement de porte (14) est agencé pour déplacer la porte coulissante (7) de la position fermée à la position ouverte, **caractérisé en ce que** le mécanisme d'actionnement de porte (14) comprend
- une liaison à ressort avec la porte coulissante (7), moyennant quoi en relâchant un ressort (15) vers une position libre, la porte coulissante s'ouvre, la position libre du ressort (15) est la position dans laquelle le ressort (15) n'est pas comprimé, et/ou
- une liaison magnétique dans laquelle, en relâchant la liaison magnétique, la porte coulissante se déplace vers la position ouverte.

2. Dispositif de fabrication d'eau pétillante (1) selon la revendication 1, **caractérisé en ce que** dans la position fermée, la porte coulissante (7) est agencée pour couvrir l'ouverture (5) du compartiment de récipient (4) et dans la position ouverte, la porte coulissante (7) est agencée à côté de l'ouverture (5) du compartiment de récipient (4).

3. Dispositif de fabrication d'eau pétillante (1) selon la revendication 1 ou 2, **caractérisé en ce que** le compartiment de récipient (4) est agencé en liaison avec la structure de corps (3c) entre la partie inférieure (3a) et la partie supérieure (3b) du corps (3).

4. Dispositif de fabrication d'eau pétillante (1) selon l'une quelconque des revendications précédentes, **caractérisé en ce que** la porte coulissante (7) est agencée pour se déplacer à l'extérieur du corps (3) ou le long d'une surface externe du corps (3) entre la position ouverte et la position fermée.

5. Dispositif de fabrication d'eau pétillante (1) selon l'une quelconque des revendications 1 à 3, **caractérisé en ce que** la porte coulissante (7) est agencée pour se déplacer à l'intérieur du corps (3) entre la position ouverte et la position fermée ; ou
la porte coulissante (7) est agencée pour se déplacer à l'intérieur du compartiment de récipient (4) entre la position ouverte et la position fermée ; ou
la porte coulissante (7) est agencée pour se déplacer entre le compartiment de récipient (4) et le corps (3) entre la position ouverte et la position fermée.

6. Dispositif de fabrication d'eau pétillante (1) selon l'une quelconque des revendications précédentes, **caractérisé en ce que** la porte coulissante (7) peut être déplacée manuellement entre la position ouverte et la position fermée.

7. Dispositif de fabrication d'eau pétillante (1) selon l'une quelconque des revendications précédentes, **caractérisé en ce que** le dispositif de fabrication d'eau pétillante (1) comprend un mécanisme de carbonatation (10) relié à la tête de carbonatation (6), le mécanisme de carbonatation (10) est agencé pour fournir du dioxyde de carbone en provenance d'une cartouche de dioxyde de carbone (9) au récipient d'eau à travers la tête de carbonatation (6) pour carbonater l'eau dans le récipient d'eau (2) avec du gaz sous pression.

8. Dispositif de fabrication d'eau pétillante (1) selon la revendication 7, **caractérisé en ce que** le dispositif de fabrication d'eau pétillante (1) comprend un deuxième commutateur (13) agencé pour actionner le mécanisme de carbonatation (10) pour fournir du dioxyde de carbone en provenance de la cartouche de dioxyde de carbone (9) à travers la tête de carbonatation (6) pour carbonater l'eau dans le récipient d'eau (2).

9. Dispositif de fabrication d'eau pétillante (1) selon les revendications 7 et 8, **caractérisé en ce que** le premier commutateur (12) et le deuxième commutateur (13) forment ensemble un commutateur commun.

10. Dispositif de fabrication d'eau pétillante (1) selon la revendication 9, **caractérisé en ce que** :
le commutateur commun présentant une première position d'actionnement agencée pour actionner le mécanisme d'actionnement de porte (14) et une deuxième position d'actionnement agencée pour actionner le mécanisme de carbonatation (10), ou
le commutateur commun ayant une première position d'actionnement agencée pour actionner le mécanisme d'actionnement de porte (14) et une deuxième position d'actionnement agencée pour actionner le mécanisme de carbonatation (10), et le commutateur commun étant un commutateur basculant.

11. Dispositif de fabrication d'eau pétillante (1) selon la revendication 9 ou 10, **caractérisé en ce que** :
le commutateur commun est prévu sur la partie supérieure (3b) du corps (3) ; ou
le commutateur commun est prévu sous forme d'au moins une partie d'une surface supérieure du dispositif de fabrication d'eau pétillante (1).

12. Dispositif de fabrication d'eau pétillante (1) selon l'une quelconque des revendications précédentes, **caractérisé en ce que** la structure de corps (3c) comprend une coque externe (16) du dispositif d'eau pétillante (1), et le compartiment de récipient (4) est prévu à l'intérieur de la coque externe (16) de telle sorte que la porte coulissante (7) fait partie de la coque externe (16) du dispositif d'eau pétillante (1) dans la position fermée.

13. Dispositif de fabrication d'eau pétillante (1) selon la revendication 12, **caractérisé en ce que** la coque externe (16) présente une ouverture de coque externe, et
dans la position fermée, la porte coulissante (7) est agencée pour couvrir à la fois l'ouverture de coque externe et l'ouverture (5) du compartiment de récipient (4), et
dans la position ouverte, l'ouverture de coque externe et l'ouverture (5) du compartiment de récipient (4) sont toutes deux ouvertes.
